# EUROPEAN PATENT SPECIFICATION

(11) **EP 4 110 586 B1**
(45) Date of publication and mention of the grant of the patent: **03.12.2025**
(21) Application number: 20921507.8
(22) Date of filing: 24.02.2020
(51) Int. Cl.: B22F 10/80, B29C 64/30, B29C 64/386, B33Y 30/00, B33Y 40/20, B33Y 50/00, B22F 5/00

(54) **SURFACE ROUGHNESS APPLICATION**
OBERFLÄCHENRAUIGKEITSANWENDUNG
APPLICATION DE RUGOSITÉ DE SURFACE

(43) Date of publication of application: 04.01.2023
(73) Proprietor: Peridot Print LLC, Palo Alto, CA 94304 (US)
(72) Inventor: GONZALEZ MARTIN, Sergio, 08174 Sant Cugat del Valles (ES); BORRAS CAMARASA, Marc, 08174 Sant Cugat del Valles (ES); ALMACELLAS VISA, Julia, 08174 Sant Cugat del Valles (ES)
(74) Representative: Haseltine Lake Kempner LLP
(86) International application number: PCT/US2020/019435
(87) International publication number: WO 2021/173109

(56) References cited:
- WO-A1-2017/007486
- WO-A2-2019/160526
- JP-A- 2018 523 011
- JP-B2- 6 306 603
- US-A1- 2017 014 910
- US-A1- 2017 197 341
- TILLMANN W ET AL: "Influence of the surface structure on the Adhesion strength of ZnAI2 coatings on thermally instable polymers printed by means of Fused Layer modelling (FLM)", ITSC 2017 : ABSTRACTS (INCLUDING PROCEEDINGS ON USB STICK) OF THE CONFERENCE IN D�SSELDORF /GERMANY ON JUNE 7-9, 2017, DUSSELDORF, GERMANY (DE), vol. 1, 7 June 2017 (2017-06-07), pages 419 - 424, XP009539788, ISBN: 978-3-96144-000-9

## Description

### BACKGROUND

Additive manufacturing techniques may generate a three-dimensional object through the solidification of a build material, for example on a layer-by-layer basis. In examples of such techniques, build material may be supplied in a layer-wise manner and the solidification method may include heating the layers of build material to cause melting in selected regions. In other techniques, chemical solidification methods may be used.

In some cases a surface of a three-dimensional object may be coated with a coating (such as an electroless plating or another coating) in a post-processing operation, to provide the three dimensional object with a particular surface finish.
WO 2019/160526 A2 describes adjusting a three-dimensional representation of an object to be manufactured in an additive manufacturing process. Tillmann W et al: "Influence of the surface structure on the Adhesion strength of ZnAl2 coatings on thermally instable polymers printed by means of Fused Layer modelling (FLM)", ITSC 2017: Abstracts (including proceedings on USB stick) of the conference in Dusseldorf Germany (June 7-9, 2017) describes directly structuring surfaces during additive manufacturing to prepare surface prior to coating processes. WO 2017/007486 A1 describes generating three-dimensional objects with target surface roughness.

### SUMMARY

The scope of the invention is defined by the appended claims.

### BRIEF DESCRIPTION OF THE DRAWINGS

Non-limiting examples will now be described with reference to the accompanying drawings, in which:
Figure 1 shows a schematic representation of an example method, which may be a method for applying a surface roughness to a 3D printed object.
Figure 2 shows a schematic representation of another example method, which may be a method for applying a surface roughness to a 3D printed object.
Figure 3 shows a schematic representation of an example 3D printing apparatus.
Figure 4 shows another schematic representation of an example 3D printing apparatus.
Figure 5 shows a schematic representation of an example machine-readable medium in association with a processor.
Figure 6A shows a schematic representation of a side view of an example surface roughness pattern which may be applied using the method of Figure 1.
Figure 6B shows a schematic representation of a side view of another example surface roughness pattern which may be applied using the method of Figure 1.

### DETAILED DESCRIPTION

Additive manufacturing techniques may generate a three-dimensional object through the solidification of a build material. In some examples, the build material is a powder-like granular material, which may for example be a plastic, ceramic or metal powder and the properties of generated objects may depend on the type of build material and the type of solidification mechanism used. In some examples the powder may be formed from, or may include, short fibres that may, for example, have been cut into short lengths from long strands or threads of material. Build material may be deposited, for example on a print bed and processed layer by layer, for example within a fabrication chamber. According to one example, a suitable build material may be PA12 build material commercially referred to as V1R10A "HP PA12" available from HP Inc.

In some examples, selective solidification is achieved using heat, for example through directional application of energy, for example using a laser or electron beam which results in solidification of build material where the directional energy is applied. In other examples, at least one print agent may be selectively applied to the build material, and may be liquid when applied. For example, a fusing agent (also termed a 'coalescence agent' or 'coalescing agent') may be selectively distributed onto portions of a layer of build material in a pattern derived from data representing a slice of a three-dimensional object to be generated (which may for example be generated from structural design data). The fusing agent may have a composition which absorbs energy such that, when energy (for example, heat) is applied to the layer, the build material heats up, coalesces and solidifies upon cooling, to form a slice of the three-dimensional object in accordance with the pattern. In other examples, coalescence may be achieved in some other manner.

According to one example, a suitable fusing agent may be an ink-type formulation comprising carbon black, such as, for example, the fusing agent formulation commercially referred to as V1Q60A "HP fusing agent" available from HP Inc. In examples, such a fusing agent may comprise any or any combination of an infra-red light absorber, a near infra-red light absorber, a visible light absorber and a UV light absorber. Examples of print agents comprising visible light absorption enhancers are dye based colored ink and pigment based colored ink, such as inks commercially referred to as CE039A and CE042A available from HP Inc.

In addition to a fusing agent, in some examples, a print agent may comprise a coalescence modifier agent, which acts to modify the effects of a fusing agent for example by reducing or increasing coalescence or to assist in producing a particular finish or appearance to an object, and such agents may therefore be termed detailing agents. In some examples, detailing agent may be used near edge surfaces of an object being printed, and may for example act to cool the build material to which it is applied, or otherwise to reduce or prevent coalescence thereof. According to one example, a suitable detailing agent may be a formulation commercially referred to as V1Q61A "HP detailing agent" available from HP Inc. A coloring agent, for example comprising a dye or colorant, may in some examples be used as a fusing agent or a coalescence modifier agent, and/or as a print agent to provide a particular color for the object.

As noted above, additive manufacturing systems may generate objects based on structural design data. This may involve a designer generating a three-dimensional model of an object to be generated, for example using a computer aided design (CAD) application. The model may define the solid portions of the object. To generate a three-dimensional object from the model using an additive manufacturing system, the model data can be processed to derive slices of parallel planes of the model. Each slice may define a portion of a respective layer of build material that is to be solidified or caused to coalesce by the additive manufacturing system.

As explained above, after printing a 3D object using additive manufacturing, a coating may be applied to the object to provide a particular surface finish. Providing a certain level of roughness to the surface of 3D printed objects may enable a coating to be applied to the 3D printed object more easily and/or create a better finish in the coated product. In some examples, a certain level of surface roughness enables a chemical coating to properly interact with and/or bond to the surface so that the coating is applied correctly and evenly. If the surface of the object is too smooth, this may result in an applied coating having an uneven or lower quality finish. For example, in electroless plating (to produce a metallic look), a certain level of surface roughness enables proper seeding of a catalysis solution.

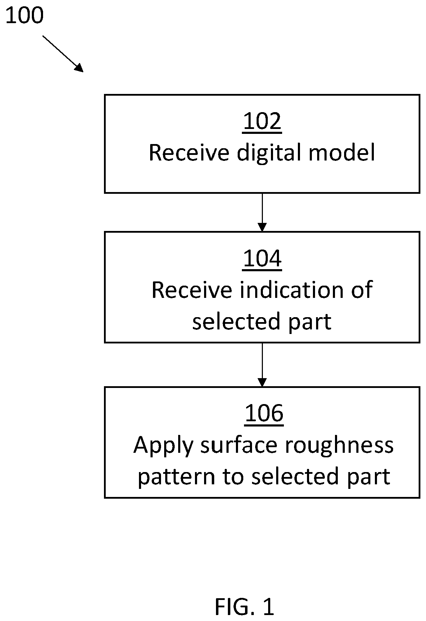

Figure 1 shows an example method 100, which may be a method for applying a surface roughness to a 3D printed object. The method 100 may be a method for priming a surface of a 3D printed object for coating. The method 100 comprises, at block 102, receiving, at a processor, a digital model representing an object to be produced by additive manufacturing. The object may be printed as part of a job comprising a batch of objects or parts, or in some cases the object may form the whole job.

At block 104, the method comprises receiving, at the processor, an indication that a first selected region of a surface of the object is to have a first coating applied after printing. In some examples, the first selected region of the surface may be the entire surface of the object or may be a smaller region of the surface, i.e. not covering the entire surface of the object. In some examples, a plurality of regions of the surface may be selected at this stage, as described in more detail below. Block 104 also comprises receiving, at the processor, an indication of a type of coating to be applied to the first selected region. The type of coating may be selected from a plurality of different types of coatings that may have different physical properties such as thickness, color, be formed from different materials or otherwise be suitable to provide different types of surface effects. For example the coating may be electroless coating (e.g. on plastics) or metal-color coating, or any other suitable type of coating. The method may comprise receiving an indication of a type of build material with which the object is to be printed.

At block 106, the method comprises applying a first predefined surface roughness pattern to the first selected region of the surface of the digital model. The predefined surface roughness pattern may comprise an applied surface texture or any surface modification involving a pattern of protrusions and depressions being applied to a surface of a predefined object. The pattern may be a regular repeating pattern or may be defined to include an element of randomness. The predefined surface roughness pattern may be, for example described in a displacement map (or bump map) such as a 3MF displacement map. In some examples, the predefined surface roughness pattern may comprise a grayscale image which describes the height to which the original surface should be displaced (e.g. with a white end of the scale indicating a maximum displacement and a black end of the scale indicating a minimum displacement). The surface roughness pattern may also comprise a height configuration parameter in microns that defines the maximum displacement. To apply the surface roughness to the object, the displacement map may be associated with the digital model and then then digital model may be converted to e.g. a 3MF format defining the object. The object may be defined using a mesh, along with any transformations to be applied to the mesh (e.g. surface displacements) stored as metadata along with the mesh. Prior to printing, the object may be processed in a voxelization process (e.g. the mesh may be converted to an Octree format or another type of voxelization such as a slice based voxelization may be performed). At this point, any surface regions that have an associated displacement map will have the displacement map applied to those regions of the surface in the voxelized model. This enables finer surface roughness patterns to be applied more efficiently than in a mesh based model, as a fine mesh would be needed in order to define small surface roughness patterns. In some examples, after the voxelization process, the object may be converted to print instructions for a 3D printing apparatus.

Block 106 comprises selecting, by the processor, a first surface roughness pattern from a plurality of stored predefined surface roughness patterns. In some examples, the method comprises receiving an indication of a type of coating to be applied and selecting, by the processor, the first surface roughness pattern based on the type of coating to be applied and/or on the type of build material with which the object is to be printed. In some examples, the method may comprise receiving a user input indicating a selection of a particular surface roughness pattern.

The method 100 of Figure 1 therefore enables surfaces of 3D printed objects to be prepared for coating during the 3D printing operation, as the surface roughness pattern is applied to the digital model representing the object. When the object is printed by a 3D printer from the digital model it will include the applied surface roughness pattern. In this way, surface roughness can be added without including an additional post-processing surface roughening operation (e.g. sand blasting or acid etching the 3D printed object to add surface roughness) in order to apply a coating. Applying predefined surface roughness patterns to the digital model means that the surface roughness patterns can be applied to the digital model more efficiently, without requiring a surface roughness pattern to be included in each design of each 3D object when creating the digital model. In addition, the method enables surface roughness to be controllably applied to the selected regions of the surface of the object and not to regions that have not been selected. In addition, creating a surface roughness pattern in this way can enable more control of the physical parameters of the surface roughness pattern, which can provide a better surface for applying a coating.

Selecting a particular predefined surface pattern from a plurality of predefined surface roughness patterns means that different surface roughness patterns can be used for different types of coating and/or different types of build material. Different surface roughness patterns can be defined specifically for different coating types and or different types of build material to provide an optimal coating finish. Automatically selecting and applying a surface roughness pattern based on a received indication of a coating type or build material type reduces the risk of user error and simplifies the design process of the 3D object.

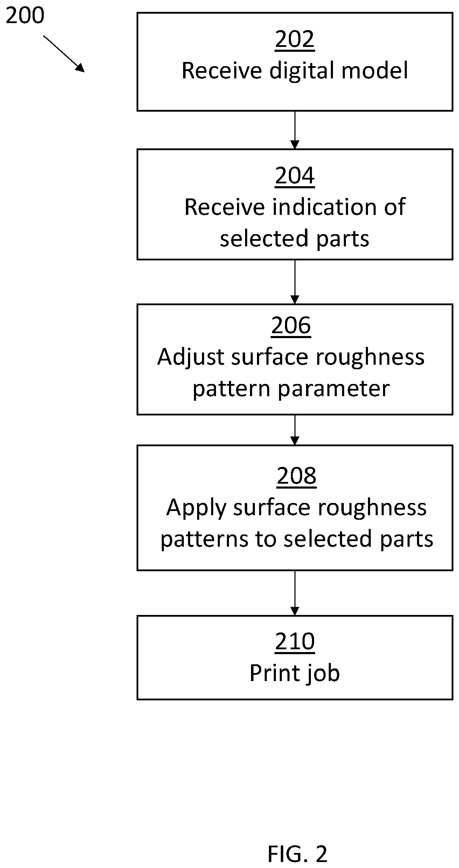

Figure 2 shows another example method 200 which may be another method for applying a surface roughness to a 3D printed object. Block 202 of method 200 comprises receiving a digital model (e.g. a 3MF format digital model) representing a object to be produced by additive manufacturing, similarly to block 102 described above.

Block 204 of the method 200 comprises receiving an indication that a first selected region of a surface of at least one part of the object is to have a first coating applied after printing and receiving an indication that a second selected region of the surface of the object is to have a second coating applied after printing. In some examples, block 204 comprises receiving an indication that three or more distinct regions of the surface of the object are to each have a coating applied. In some examples, the object may include coatings of different types being applied to different regions of the surface.

Block 206 comprises adjusting a parameter of the predefined surface roughness pattern to be applied to the digital model based on a user input. The parameter may comprise, for example, a depth, spacing or a shape or size of surface features of the surface roughness pattern. For example, a user may be provided with a set of adjustable parameters for each surface roughness pattern. In this way, the surface roughness pattern design is flexible and can be adjusted by a user for specific coatings or for new types of coatings. In addition, enabling adjustment of the surface roughness pattern in this way can enable more control of the physical parameters of the surface roughness pattern.

Block 208 comprises applying a first predefined surface roughness pattern to the first selected region of the surface of the digital model and applying a second predefined surface roughness pattern to the second selected region of the surface of the digital model.

Therefore the method 200 enables different types of surface roughness pattern to be applied to different regions of the 3D print object. These can then be produced in a single operation during of the layer-by-layer build process.

Block 210 of method 200 comprises sending the digital model including the applied surface roughness to a 3D printing apparatus and printing the digital model by additive manufacturing. In some examples, the method may include applying a first coating to the first selected region of the 3D printed object and applying a second coating to the second selected region of the 3D printed object.

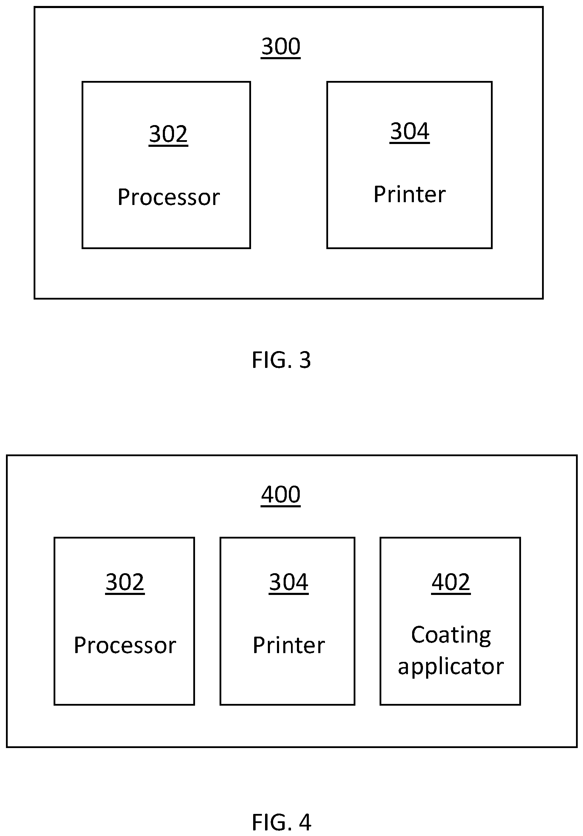

Figure 3 shows an example 3D printing apparatus 300, which may be to perform the methods described above in relation to Figure 1 and Figure 2. The 3D printing apparatus 300 comprises a processor 302, wherein the processor 302 is to receive a digital model representing a object to be produced by additive manufacturing. For example, the digital model may be received in a 3MF format, or another format suitable for conversion into 3D print instructions. The processor 302 is additionally to receive an indication that a region of the surface of the object is to have a particular coating type applied as a post-processing operation. The processor 302 is further to apply a predefined surface roughness pattern to the digital model, wherein a parameter of the surface roughness pattern is selected based on the particular coating type. Applying a predefined surface roughness pattern may comprise applying a surface roughness pattern in the form of a displacement map to part or all of the surface of the digital model.

The 3D printing apparatus 300 also comprises a printer 304, wherein the printer is to print the object represented by the digital model, including the pre-defined surface roughness pattern, by additive manufacturing.

In some examples, the processor 302 may be to receive a user defined adjustment to a parameter (e.g. a geometric parameter) of the pre-defined surface roughness pattern. The adjustment may be, for example, to the selected parameter or to another parameter of the surface roughness pattern. In some examples, the processor 302 may then apply the adjusted pre-defined surface roughness pattern to the digital model. In some examples, the parameter may be adjusted after the surface roughness pattern has been applied to the digital model and the digital model may then be updated.

In some examples, the processor 302 may be to receive an indication that each of a plurality of regions of the surface of the object is to receive a different coating type. The processor 302 is then to apply a different surface roughness pattern to each of the plurality of regions based on each different coating type.

Figure 4 shows another example 3D printing apparatus 400 which may be to perform the methods described in relation to Figures 1 and 2. 3D printing apparatus 400 includes a processor 302 and a printer 304 as described above in relation to Figure 3.

The 3D printing apparatus 400 also comprises a coating applicator 402 which may be housed in a same or different housing from the processor and the 3D printer. The coating application may be to apply a coating to the object as a post-processing operation following build of the object by the printer. For example, the coating applicator may be to expose the part to a coating chemical e.g. in liquid or gas form. Therefore, the apparatus 400 can produce a coated 3D printed object with a high quality finish due to the surface roughness pattern being tailored to the particular coating.

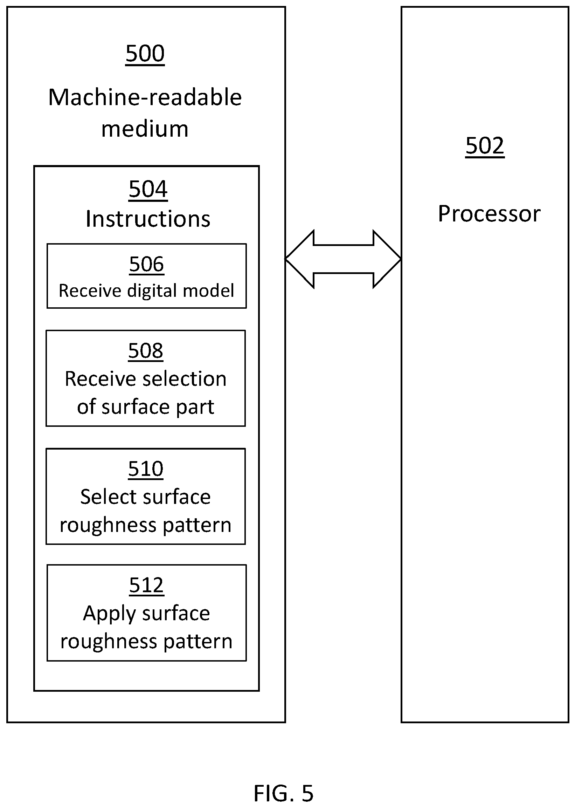

Figure 5 shows an example tangible machine-readable medium 500 in association with a processor 502. The machine-readable medium 500 and processor 502 may form part of the apparatus 300 or 400 and may be suitable to perform the method 100 or 200 described above.

The machine-readable medium 500 comprises a set of instructions 504, which, when executed by a processor, cause the processor to, at block 506, receive a digital model representation of a object, wherein the digital model is to be converted to print instructions for a 3D printer. For example, the digital model may be a 3MF file describing an objected to be 3D printed.

Block 508 of the instructions 504 comprises instructions to receive a selection of a region of a surface of the digital model which is to receive a coating. Block 520 comprises instructions to select a surface roughness pattern from a plurality of stored, predefined types of surface roughness pattern. The particular selection may be e.g. an automatic selection or may be in response to a user input. In some examples, each of the stored predefined types of surface roughness pattern is associated with a particular coating type. Block 512 comprises instructions to apply the surface roughness pattern to the selected region of the surface of the digital model, prior to converting the model to the print instructions.

Therefore, the surface roughness pattern is integrated into the 3D print instructions and can be built as part of the 3D object during an additive manufacturing operation, without requiring additional post-processing procedures.

In some examples, the instructions 504 may also comprise instructions to cause the processor 502 to, in response to receiving a user input, adjust a parameter of the selected surface roughness pattern. In some examples, the instructions 504 are to cause the processor 502 to receive a selection of a plurality of regions of the surface of the digital model and to cause the processor 502 to select and apply a different surface roughness pattern to each of the plurality of regions.

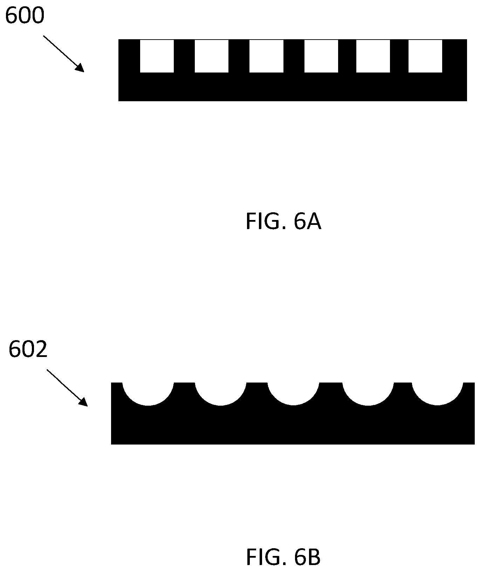

In some examples, the surface roughness pattern may comprise a repeating pattern of surface depressions or protrusions, for example as shown in Figures 6A and 6B, which show surface roughness pattern 600 and 602 respectively. The adjustable parameter may comprise one or a plurality of a depth, height shape and spacing of the depressions or protrusions. For example, the shape of the depressions can be any suitable shape such as e.g. spherical holes, cylindrical holes or quadratic pyramidal holes, and may be different for different coating types. Figure 6A shows a surface roughness pattern with cylindrical holes and Figure 6B shows a surface roughness pattern with hemispherical holes. The adjustable parameter may be a global parameter such that the adjustment causes an adjustment of that parameter throughout the whole area of the surface roughness pattern (e.g. an adjustment to the depth of the depressions may adjust the depth of all depressions of the same type in the pattern).

The present disclosure is described with reference to flow charts and/or block diagrams of the method, devices and systems according to examples of the present disclosure. Although the flow diagrams described above show a specific order of execution, the order of execution may differ from that which is depicted. Blocks described in relation to one flow chart may be combined with those of another flow chart. It shall be understood that each flow and/or block in the flow charts and/or block diagrams, as well as combinations of the flows and/or diagrams in the flow charts and/or block diagrams can be realized by machine readable instructions.

It shall be understood that some blocks in the flow charts can be realized using machine readable instructions, such as any combination of software, hardware, firmware or the like. Such machine readable instructions may be included on a computer readable storage medium (including but is not limited to disc storage, CD-ROM, optical storage, etc.) having computer readable program codes therein or thereon.

The machine readable instructions may, for example, be executed by a general purpose computer, a special purpose computer, an embedded processor or processors of other programmable data processing devices to realize the functions described in the description and diagrams. In particular, a processor or processing apparatus may execute the machine readable instructions. Thus functional modules of the apparatus and devices may be implemented by a processor executing machine readable instructions stored in a memory, or a processor operating in accordance with instructions embedded in logic circuitry. The term 'processor' is to be interpreted broadly to include a CPU, processing unit, ASIC, logic unit, or programmable gate array etc. The methods and functional modules may all be performed by a single processor or divided amongst several processors.

Such machine readable instructions may also be stored in a computer readable storage that can guide the computer or other programmable data processing devices to operate in a specific mode. Further, some teachings herein may be implemented in the form of a computer software product, the computer software product being stored in a storage medium and comprising a plurality of instructions for making a computer device implement the methods recited in the examples of the present disclosure.

The word "comprising" does not exclude the presence of elements other than those listed in a claim, "a" or "an" does not exclude a plurality, and a single processor or other unit may fulfil the functions of several units recited in the claims.

The features of any dependent claim may be combined with the features of any of the independent claims or other dependent claims.

## Claims

1. A method comprising:
receiving, at a processor, a digital model representing an object to be produced by additive manufacturing;
receiving, at the processor, an indication that a first selected region of a surface of the object is to have a first coating applied after printing;
selecting, by the processor and based on the first coating to be applied, a first surface roughness pattern from a plurality of stored predefined surface roughness patterns; and
applying the first predefined surface roughness pattern to the first selected region of the surface of the digital model prior to converting the digital model to the print instructions.

2. A method according to claim 1, wherein the method further comprises:
receiving, at the processor, an indication of a type of the coating to be applied; and
automatically selecting, by the processor, the first surface roughness pattern based on the type of coating.

3. A method according to claim 1, further comprising:
receiving, at the processor an indication that a second selected region of the surface of the object is to have a second coating applied after printing;
applying a second predefined surface roughness pattern to the second selected region of the surface of the digital model.

4. A method according to claim 1, further comprising printing, by a 3D printing apparatus, the object represented by the digital model, including the applied surface roughness, by additive manufacturing.

5. A method according to claim 1, further comprising adjusting a parameter of the predefined surface roughness pattern to be applied to the digital model based on a user input.

6. A 3D printing apparatus comprising:
a processor to:
receive a digital model representing an object to be produced by additive manufacturing;
receive an indication that a region of the surface of the object is to have a particular coating type applied as a post-processing operation;
apply a predefined surface roughness pattern to the digital model, wherein the surface roughness pattern is selected based on the particular coating type prior to converting the digital model to the print instructions; and
a printer to print the object represented by the digital model, including the predefined surface roughness pattern, by additive manufacturing.

7. A 3D printing apparatus according to claim 6, the printing apparatus further comprising a coating applicator, to apply a coating to the object as a post-processing operation following build of the object by the printer.

8. A 3D printing apparatus according to claim 6, wherein the processor is further to receive a user defined adjustment to a parameter of the predefined surface roughness pattern and is to apply an adjusted predefined surface roughness pattern to the digital model.

9. A 3D printing apparatus according to claim 6 wherein the processor is to receive an indication that each of a plurality of regions of the surface of the object is to receive a different coating type, and apply a different surface roughness pattern to each of the plurality of regions based on each different coating type.

10. A tangible machine-readable medium comprising a set of instructions which, when executed by a processor, cause the processor to:
receive a digital model representation of an object, wherein the digital model is to be converted to print instructions for a 3D printer;
receive a selection of a region of a surface of the digital model which is to receive a coating;
select, based on the coating, a surface roughness pattern from a plurality of stored, predefined types of surface roughness pattern; and
apply the surface roughness pattern to the selected region of the surface of the digital model, prior to converting the model to the print instructions.

11. A tangible machine-readable medium according to claim 10 wherein each of the stored predefined types of surface roughness pattern is associated with a particular coating type.

12. A tangible machine-readable medium according to claim 10 wherein the instructions are further to cause the processor to, in response to receiving a user input, adjust a parameter of the selected surface roughness pattern.

13. A tangible machine-readable medium according to claim 12, wherein the surface roughness pattern comprises a repeating pattern of surface depressions or protrusions and wherein the adjustable parameter comprises one or more of a depth, height shape and spacing of the depressions or protrusions.

14. A tangible machine-readable medium according to claim 10, wherein the instructions are to cause the processor to receive a selection of a plurality of regions of the surface of the digital model and to cause the processor to select and apply a different surface roughness pattern to each of the plurality of regions.

## Patentansprüche

1. Verfahren, das umfasst:
Empfangen eines digitalen Modells an einem Prozessor, das ein durch additive Fertigung herzustellendes Objekt darstellt;
Empfangen einer Angabe an dem Prozessor, dass auf einen ersten ausgewählten Bereich einer Oberfläche des Objekts nach dem Drucken eine erste Beschichtung aufgebracht werden soll;
Auswählen eines ersten Oberflächenrauheitsmusters aus einer Vielzahl gespeicherter vordefinierter Oberflächenrauheitsmuster durch den Prozessor und auf der Basis von der aufzubringenden ersten Beschichtung; und
Aufbringen des ersten vordefinierten Oberflächenrauheitsmusters auf den ersten ausgewählten Bereich der Oberfläche des digitalen Modells vor der Umwandlung des digitalen Modells in die Druckanweisungen.

2. Verfahren nach Anspruch 1, wobei das Verfahren ferner umfasst:
Empfangen einer Angabe eines Typs der aufzubringenden Beschichtung an dem Prozessor; und
automatisches Auswählen des ersten Oberflächenrauheitsmusters durch den Prozessor auf der Basis von dem Beschichtungstyp.

3. Verfahren nach Anspruch 1, das ferner umfasst:
Empfangen einer Angabe an dem Prozessor, dass auf einen zweiten ausgewählten Bereich der Oberfläche des Objekts nach dem Drucken eine zweite Beschichtung aufgebracht werden soll;
Aufbringen eines zweiten vordefinierten Oberflächenrauheitsmusters auf den zweiten ausgewählten Bereich der Oberfläche des digitalen Modells.

4. Verfahren nach Anspruch 1, das ferner das Drucken des durch das digitale Modell dargestellten Objekts, einschließlich der aufgebrachten Oberflächenrauheit, durch additive Fertigung mit einer 3D-Druckvorrichtung umfasst.

5. Verfahren nach Anspruch 1, das ferner das Anpassen eines Parameters des vordefinierten Oberflächenrauheitsmusters, das auf das digitale Modell auf der Basis von einer Benutzereingabe aufzubringen ist, umfasst.

6. 3D-Druckvorrichtung, die umfasst:
einen Prozessor, der zu Folgendem dient:
Empfangen eines digitalen Modells, das ein durch additive Fertigung herzustellendes Objekt darstellt;
Empfangen einer Angabe, dass auf einen Bereich der Oberfläche des Objekts als Nachbearbeitungsvorgang ein bestimmter Beschichtungstyp aufzubringen ist;
Aufbringen eines vordefinierten Oberflächenrauheitsmusters auf das digitale Modell, wobei das Oberflächenrauheitsmuster auf der Basis von dem bestimmten Beschichtungstyp ausgewählt wird, bevor das digitale Modell in Druckanweisungen umgewandelt wird; und
einen Drucker zum Drucken des durch das digitale Modell dargestellten Objekts, einschließlich des vordefinierten Oberflächenrauheitsmusters, durch additive Fertigung.

7. 3D-Druckvorrichtung nach Anspruch 6, wobei die Druckvorrichtung ferner einen Beschichtungsapplikator umfasst, um als Nachbearbeitungsvorgang nach dem Aufbau des Objekts durch den Drucker eine Beschichtung auf das Objekt aufzubringen.

8. 3D-Druckvorrichtung nach Anspruch 6, wobei der Prozessor ferner dazu dient, eine benutzerdefinierte Anpassung eines Parameters des vordefinierten Oberflächenrauheitsmusters zu empfangen und dazu dient, ein angepasstes vordefiniertes Oberflächenrauheitsmuster auf das digitale Modell anzuwenden.

9. 3D-Druckvorrichtung nach Anspruch 6, wobei der Prozessor dazu dient, eine Angabe zu empfangen, dass jeder einer Vielzahl von Bereichen der Oberfläche des Objekts einen anderen Beschichtungstyp erhalten soll, und auf der Basis von jedem unterschiedlichen Beschichtungstyp ein anderes Oberflächenrauheitsmuster auf jeden der Vielzahl von Bereichen aufzubringen.

10. Greifbares maschinenlesbares Medium, das einen Satz von Anweisungen umfasst, die, wenn sie durch einen Prozessor ausgeführt werden, den Prozessor zu Folgendem veranlassen:
Empfangen einer digitalen Modelldarstellung eines Objekts, wobei das digitale Modell in Druckanweisungen für einen 3D-Drucker umgewandelt werden soll;
Empfangen einer Auswahl eines Bereichs einer Oberfläche des digitalen Modells, der eine Beschichtung erhalten soll;
Auswählen eines Oberflächenrauheitsmusters auf der Basis von der Beschichtung aus einer Vielzahl gespeicherter, vordefinierter Oberflächenrauheitsmustertypen; und
Aufbringen des Oberflächenrauheitsmusters auf den ersten ausgewählten Bereich der Oberfläche des digitalen Modells vor der Umwandlung des Modells in die Druckanweisungen.

11. Greifbares maschinenlesbares Medium nach Anspruch 10, wobei jeder der gespeicherten vordefinierten Typen von Oberflächenrauheitsmustern einem bestimmten Beschichtungstyp zugeordnet ist.

12. Greifbares, maschinenlesbares Medium nach Anspruch 10, wobei die Anweisungen ferner dazu dienen, den Prozessor zu veranlassen, als Reaktion auf das Empfangen einer Benutzereingabe einen Parameter des ausgewählten Oberflächenrauheitsmusters anzupassen.

13. Greifbares maschinenlesbares Medium nach Anspruch 12, wobei das Oberflächenrauheitsmuster ein sich wiederholendes Muster aus Oberflächenvertiefungen oder -vorsprüngen umfasst und wobei der anpassbare Parameter eines oder mehreres von Tiefe, Höhe, Form und Abstand der Vertiefungen oder Vorsprünge umfasst.

14. Greifbares maschinenlesbares Medium nach Anspruch 10, wobei die Anweisungen dazu dienen, den Prozessor zu veranlassen, eine Auswahl aus einer Vielzahl von Bereichen der Oberfläche des digitalen Modells zu empfangen und den Prozessor zu veranlassen, für jeden der Vielzahl von Bereichen ein anderes Oberflächenrauheitsmuster auszuwählen und aufzubringen.

## Revendications

1. Procédé comprenant :
la réception, au niveau d'un processeur, d'un modèle numérique représentant un objet à produire par fabrication additive ;
la réception, au niveau du processeur, d'une indication du fait qu'une première région sélectionnée d'une surface de l'objet doit avoir un premier revêtement appliqué après l'impression ;
la sélection, par le processeur et sur la base du premier revêtement à appliquer, d'un premier motif de rugosité de surface parmi une pluralité de motifs de rugosité de surface prédéfinis stockés ; et
l'application du premier motif de rugosité de surface prédéfini à la première région sélectionnée de la surface du modèle numérique avant de convertir le modèle numérique en instructions d'impression.

2. Procédé selon la revendication 1, dans lequel le procédé comprend en outre :
la réception, au niveau du processeur, d'une indication d'un type de revêtement à appliquer ; et
la sélection automatique, par le processeur, du premier motif de rugosité de surface sur la base du type de revêtement.

3. Procédé selon la revendication 1, comprenant en outre :
la réception, au niveau du processeur, d'une indication du fait qu'une seconde région sélectionnée de la surface de l'objet doit avoir un second revêtement appliqué après l'impression ;
l'application d'un second motif de rugosité de surface prédéfini à la seconde région sélectionnée de la surface du modèle numérique.

4. Procédé selon la revendication 1, comprenant en outre l'impression, par un appareil d'impression 3D, de l'objet représenté par le modèle numérique, comportant la rugosité de surface appliquée, par fabrication additive.

5. Procédé selon la revendication 1, comprenant en outre le réglage d'un paramètre du motif de rugosité de surface prédéfini à appliquer au modèle numérique sur la base d'une entrée utilisateur.

6. Appareil d'impression 3D comprenant :
un processeur pour :
recevoir un modèle numérique représentant un objet à produire par fabrication additive ;
recevoir une indication du fait qu'une région de la surface de l'objet doit avoir un type de revêtement particulier appliqué dans le cadre d'une opération de post-traitement ;
appliquer un motif de rugosité de surface prédéfini au modèle numérique, dans lequel le motif de rugosité de surface est sélectionné sur la base du type de revêtement particulier avant de convertir le modèle numérique en instructions d'impression ; et
une imprimante destinée à imprimer l'objet représenté par le modèle numérique, comportant le motif de rugosité de surface prédéfini, par fabrication additive.

7. Appareil d'impression 3D selon la revendication 6, l'appareil d'impression comprenant en outre un applicateur de revêtement destiné à appliquer un revêtement à l'objet dans le cadre d'une opération de post-traitement après la construction de l'objet par l'imprimante.

8. Appareil d'impression 3D selon la revendication 6, dans lequel le processeur doit en outre recevoir un réglage défini par l'utilisateur d'un paramètre du motif de rugosité de surface prédéfini et doit appliquer un motif de rugosité de surface prédéfini réglé au modèle numérique.

9. Appareil d'impression 3D selon la revendication 6, dans lequel le processeur doit recevoir une indication du fait que chacune d'une pluralité de régions de la surface de l'objet doit recevoir un type de revêtement différent, et appliquer un motif de rugosité de surface différent à chacune de la pluralité de régions sur la base de chaque type de revêtement différent.

10. Support lisible par machine tangible comprenant un ensemble d'instructions qui, lorsqu'elles sont exécutées par un processeur, amènent le processeur à :
recevoir une représentation de modèle numérique d'un objet, dans lequel le modèle numérique doit être converti en instructions d'impression pour une imprimante 3D ;
recevoir une sélection d'une région d'une surface du modèle numérique qui doit recevoir un revêtement ;
sélectionner, sur la base du revêtement, un motif de rugosité de surface parmi une pluralité de types de motif de rugosité de surface prédéfinis stockés ; et
appliquer le motif de rugosité de surface à la région sélectionnée de la surface du modèle numérique, avant de convertir le modèle en instructions d'impression.

11. Support lisible par machine tangible selon la revendication 10, dans lequel chacun des types de motif de rugosité de surface prédéfinis stockés est associé à un type de revêtement particulier.

12. Support lisible par machine tangible selon la revendication 10, dans lequel les instructions doivent en outre amener le processeur, en réponse à la réception d'une entrée utilisateur, à régler un paramètre du motif de rugosité de surface sélectionné.

13. Support lisible par machine tangible selon la revendication 12, dans lequel le motif de rugosité de surface comprend un motif répétitif de dépressions ou de saillies de surface et dans lequel le paramètre réglable comprend l'un ou plusieurs parmi une profondeur, une forme en hauteur et un espacement des dépressions ou des saillies.

14. Support lisible par machine tangible selon la revendication 10, dans lequel les instructions doivent amener le processeur à recevoir une sélection d'une pluralité de régions de la surface du modèle numérique et amener le processeur à sélectionner et à appliquer un motif de rugosité de surface différent à chacune de la pluralité de régions.
